# EUROPEAN PATENT APPLICATION

(11) **EP 3 171 326 A1**
(43) Date of publication of application: **24.05.2017**
(21) Application number: 16199864.6
(22) Date of filing: 21.11.2016
(51) Int. Cl.: G06Q 50/00, G06Q 30/02

(54) **CONTACT MANAGING METHOD AND APPARATUS, COMPUTER PROGRAM AND RECORDING MEDIUM**

(30) Priority: 20.11.2015 CN 201510812863
(71) Applicant: Xiaomi Inc., Beijing 100085 (CN)
(72) Inventor: MA, Kun, Haidian District, Beijing 100085 (CN); SHI, Dalong, Haidian District, Beijing 100085 (CN); LIN, Jinbin, Haidian District, Beijing 100085 (CN)
(74) Representative: Sadler, Peter Frederick

(57) **Abstract**

The present invention discloses a contact managing method and apparatus, a computer program and a recording medium. The method comprises: acquiring contact information of contacts in a contact book, the contact information including information on viewing of social information of the contacts; determining at least one contact whose contact information meets a prescribed condition as at least one contact to be deleted; and displaying the determined contact to be deleted. In embodiments of the present invention, the contact information includes the information on viewing of social information of the contacts. Accordingly, a terminal device can provide contacts to be deleted based on the information on viewing of social information of the contacts, so that it is convenient for a user to manage the contacts in the contact book based on the information on viewing of social information of the contacts.

## Description

### TECHNICAL FIELD

The present invention is related to telecommunication technologies, and more particularly, to a contact managing method and apparatus, a computer program and a recording medium.

### BACKGROUND

Continuous development of telecommunication technologies enables more people to contact their friends using telecommunication tools, such as instant-messaging tools, short message applications and phone call applications. As time passes by, the number of contacts stored in a contact book of a telecommunication tool may increase. Some of the contacts may be rarely contacted, and the time of adding a certain contact may be forgotten by a user himself/herself. The increasing number of contacts stored in a contact book may be bothersome for the user.

### SUMMARY OF THE INVENTION

Accordingly, embodiments of the present invention provide a contact managing method and apparatus, a computer program and a recording medium. The technical solutions are as below.

According to a first aspect of embodiments of the present invention, there is provided a contact managing method, comprising: acquiring contact information of contacts in a contact book, the contact information including information on viewing of social information of the contacts; determining at least one contact whose contact information meets a prescribed condition as at least one contact to be deleted; and displaying the determined contact to be deleted.

Optionally, before acquiring the contact information of the contacts in the contact book, the method further comprises recording one or more of the following kinds of contact information for each contact: a time when the contact is added, a time when the contact is contacted and/or the number of times the contact is contacted, and information on viewing of social information of the contact. The information on viewing of the social information of the contact comprises one or more of: a time when a profile of the contact is viewed and/or the number of times the profile of the contact is viewed, a time when a personal space of the contact is viewed and/or the number of times the personal space of the contact is viewed, a time when information issued by the contact is read and/or the number of times the information issued by the contact is read, and a time when the contact's comments are responded to and/or the number of times the contact's comments are responded to. Acquiring the contact information of the contacts in the contact book comprises: acquiring contact information of the contacts in the contact book from the recorded contact information.

Optionally, after displaying the determined contact to be deleted, the method further comprises: receiving a deleting instruction from a user, the deleting instruction indicating selection of one or more of the at least one contact to be deleted; and deleting the one or more contacts from the contact book.

Optionally, before acquiring the contact information of the contacts in the contact book, the method further comprises: receiving an instruction of cleaning up contacts.

Optionally, acquiring the contact information of the contacts in the contact book comprises: acquiring the contact information of the contacts in the contact book at every prescribed time interval.

According to a second aspect of the embodiments of the present invention, there is provided a contact managing apparatus, comprising: an acquiring module configured to acquire contact information of contacts in a contact book, the contact information including information on viewing of social information of the contacts; a determining module configured to determine at least one contact whose contact information acquired by the acquiring module meets a prescribed condition as at least one contact to be deleted; and a displaying module configured to display the contact to be deleted determined by the determining module.

Optionally, the apparatus further comprises a recording module configured to, before the contact information of the contacts is acquired by the acquiring module, record one or more of the following kinds of contact information for each contact: a time when the contact is added, a time when the contact is contacted and/or the number of times the contact is contacted, and information on viewing of social information of the contact. The information on viewing of the social information of the contact comprises one or more of: a time when a profile of the contact is viewed and/or the number of times the profile of the contact is viewed, a time when a personal space of the contact is viewed and/or the number of times the personal space of the contact is viewed, a time when information issued by the contact is read and/or the number of times the information issued by the contact is read, and a time when the contact's comments is responded to and/or the number of times the contact's comments is responded to. The acquiring module is configured to acquire contact information of the contacts in the contact book from the contact information recorded by the recording module.

Optionally, the apparatus further comprises: a first receiving module configured to receive a deleting instruction from a user, the deleting instruction indicating selection of one or more of the at least one contact to be deleted that is displayed by the displaying module; and a deleting module configured to delete, from the contact book, the one or more contacts which are selected according to the deleting instruction received by the receiving module.

Optionally, the apparatus further comprises: a second receiving module configured to receive an instruction of cleaning up contacts, before the contact information of the contacts in the contact book is acquired by the acquiring module.

Optionally, the acquiring module is configured to acquire the contact information of the contacts in the contact book at every prescribed time interval.

According to a third aspect of the embodiments of the present invention, there is provided a contact managing apparatus, comprising: a processor; and a memory storing instructions executable by the processor. The processor is configured to: acquire contact information of contacts in a contact book, the contact information including information on viewing of social information of the contacts; determine at least one contact whose contact information meets a prescribed condition as at least one contact to be deleted; and display the determined contact to be deleted.

In one particular embodiment, the steps of the contact managing method are determined by computer program instructions.

Consequently, according to a fourth aspect, the invention is also directed to a computer program for executing the steps of a contact managing method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions according to the embodiments of this invention may have the following advantageous effects.

With the above technical solutions, a terminal device can determine, based on contact information of the contacts in the contact book and the prescribed condition, which ones of the contacts have contact information that meets the prescribed condition; determine those contacts as contacts to be deleted; and display the determined contacts to be deleted, wherein the contact information includes information on viewing of social information of the contacts. As a result, the terminal device can provide contacts to be deleted based on the information on viewing of the social information of the contacts, so that it is convenient for a user to manage the contacts in the contact book based on the information on viewing of the social information of the contacts.

In another embodiment, the contact information of contacts is recorded in advance, so that selection of contacts based on the recorded contact information can be performed. In addition, by displaying the selected contacts to the user, the user can conveniently select therefrom the contacts to be deleted. Therefore, the user can be provided with a function of deleting contacts by batch, and it is convenient for the user to manage contacts.

In yet another embodiment, the method may be initiated depending on whether the instruction of cleaning up contacts is received. The instruction of cleaning up contacts may be triggered by selecting a functional key disposed on a terminal device or on an application in the terminal device so that the user can manually start the function of cleaning up contacts.

In still another embodiment, the contact managing method may be performed regularly and automatically.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is flow chart showing a contact managing method according to an embodiment;
Fig. 2 is a flow chart showing a contact managing method according to another embodiment;
Fig. 3 is a schematic diagram showing how to display determined contacts to be deleted on a cell phone interface according to an embodiment;
Fig. 4 is a flow chart showing a contact managing method according to yet another embodiment;
Fig. 5 is a block diagram showing a contact managing apparatus according to an embodiment;
Fig. 6 is a block diagram showing a contact managing apparatus according to another embodiment;
Fig. 7 is a block diagram showing a contact managing apparatus according to yet another embodiment; and
Fig. 8 is a block diagram showing a contact managing apparatus according to still another embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise presented. The embodiments set forth in the following description of embodiments do not represent all embodiments consistent with the invention. Instead, they are merely examples of apparatuses and methods consistent with aspects related to the invention as recited in the appended claims.

The technical solutions provided by the embodiments of the present invention relate to a terminal device, which may be a cell phone, a tablet computer, a laptop computer or the like. The terminal device manages contacts in a contact book, which is stored in the terminal device or in an application installed in the terminal device.

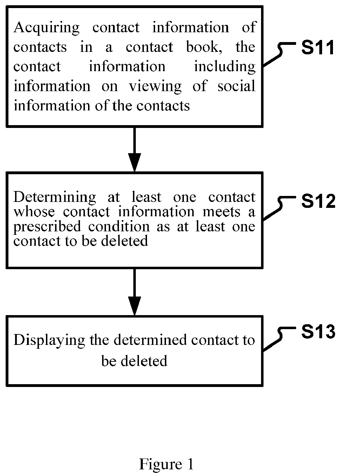

Fig. 1 is a flow chart showing a contact managing method according to an embodiment. As shown in Fig. 1, the contact managing method is used in a terminal device, and comprises steps S11-S13.

In step S11, contact information of contacts in a contact book in acquired, the contact information including information on viewing of social information of the contacts.

The contact information may include one or more of the following kinds of contact information: a time when a contact is added, a time when the contact is contacted and/or the number of times the contact is contacted, a time when a profile of the contact is viewed and/or the number of times the profile of the contact is viewed, a time when a personal space of the contact is viewed and/or the number of times the personal space of the contact is viewed, a time when information issued by the contact is read and/or the number of times the information issued by the contact is read, and a time when the contact' comments are responded to and/or the number of times the contact's comments are responded to. The time when the profile of the contact is viewed and/or the number of times the profile of the contact is viewed, the time when the personal space of the contact is viewed and/or the number of times the personal space of the contact is viewed, the time when information issued by the contact is read and/or the number of times the information issued by the contact is read, and the time when the contact' comments are responded to and/or the number of times the contact's comments are responded to belong to the information on viewing of the social information of the contact.

In step S12, at least one contact whose contact information meets a prescribed condition is determined as at least one contact to be deleted.

In step S13, the determined contact to be deleted is displayed.

In this embodiment, a terminal device can determine, based on contact information of the contacts in the contact book and the prescribed condition, which ones of the contacts have contact information that meets the prescribed condition; and display the determined contacts to be deleted, wherein the contact information includes information on viewing of social information of the contacts. As a result, the terminal device can provide contacts to be deleted based on the information on viewing of the social information of the contacts, so that it is convenient for a user to manage the contacts in the contact book based on the information on viewing of the social information of the contacts.

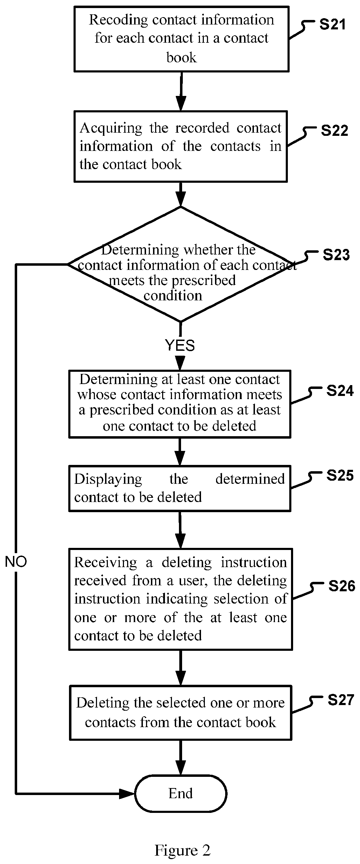

Fig. 2 is a flow chart showing a contact managing method according to another embodiment. As shown in Fig. 2, in the embodiment, the contact managing method comprises the followings steps.

In step S21, contact information for each contact in the contact book is recorded.

The contact information may include one or more of: a time when the contact is added, a time when the contact is contacted and/or the number of times the contact is contacted, a time when a profile of the contact is viewed and/or the number of times the profile of the contact is viewed, a time when a personal space of the contact is viewed and/or the number of times the personal space of the contact is viewed, a time when information issued by the contact is read and/or the number of times the information issued by the contact is read, and a time when the contact's comments are responded to and/or the number of times the contact's comments are responded to.

In step S22, the recorded contact information of the contacts in the contact book is acquired.

In step S23, it is determined whether the contact information of each contact meets a prescribed condition. If yes, step S24 is performed; if no, the process ends.

The prescribed condition is a basis for determining whether a contact can be deleted, may be designed by a user himself/herself according to his/her own needs, and may be loose or strict. An example of a loose prescribed condition may be that the most recent time when information issued by the contact was read is half a year ago; that is, if the information issued by the contact has not been read in the recent half a year, the contact is determined as a contact to be deleted. An example of a strict prescribed condition may be that the most recent time when information issued by the contact was read is one month ago and the most recent time when the contact responded to comments is one month ago; that is, only if the information issued by the contact has not been read in the recent month and the contact has not responded to comments in the recent month, the contact is determined as a contact to be deleted.

In other embodiments of the present invention, the prescribed condition may be set according to the needs of the user.

In step S24, at least one contact whose contact information meets the prescribed condition is determined as at least one contact to be deleted.

In step S25, the determined contact to be deleted is displayed.

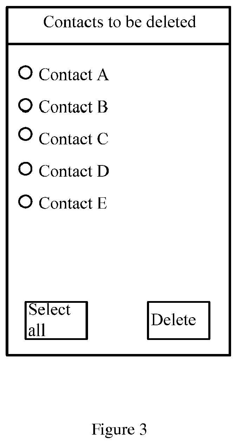

By way of example, Fig. 3 illustrates an interface of a mobile phone where the at least one determined contact to be deleted is displayed in a list.

In step S26, a deleting instruction is received from the user, the deleting instruction indicating selection of one or more of the displayed at least one contact to be deleted.

For example, the user may select a contact to be deleted by checking a check box in a list of contacts to be deleted shown in Fig. 3.

In step S27, the selected one or more contacts are deleted from the contact book.

In this embodiment, the contact information of contacts is recorded in advance, so that selection of contacts based on the recorded contact information can be performed. In addition, in this embodiment, by displaying the selected contacts to the user, the user can conveniently select therefrom the contacts to be deleted. Therefore, the user can be provided with a function of deleting contacts by batch, and it is convenient for the user to manage contacts.

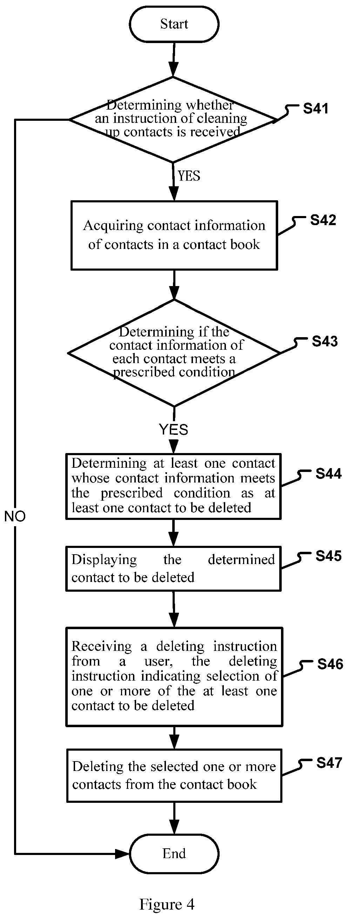

Fig. 4 is a flow chart showing a contact managing method according to yet another embodiment. As shown in Fig. 4, in the embodiment, the contact managing method comprises the followings steps.

In step S41, it is determined whether an instruction of cleaning up contacts is received. If yes, step S42 is performed; if no, the process ends.

In step S42, contact information of contacts in a contact book is acquired.

In step S43, it is determined whether the contact information of each contact meets the prescribed condition. If yes, step S44 is performed; if no, the process ends.

In step S44, at least one contact whose contact information meets the prescribed condition is determined as at least one contact to be deleted.

In step S45, the determined contact to be deleted is displayed.

In step S46, a deleting instruction is received from a user, the deleting instruction indicating selection of one or more of at least one contact to be deleted.

In step S47, the selected one or more contacts are deleted from the contact book.

In this embodiment, the method may be initiated depending on whether the instruction of cleaning up contacts is received. The instruction of cleaning up contacts may be triggered by selecting a functional key disposed on a terminal device or on an application in the terminal device so that the user can manually start the function of cleaning up contacts.

In other embodiments, the contact managing method may be performed regularly and automatically. For example, the application in the terminal device may automatically clean up contacts once every week or every 3 days, and display all the contacts to be deleted.

The followings are apparatus embodiments of the present invention, which may be used to perform the method embodiments of the present invention.

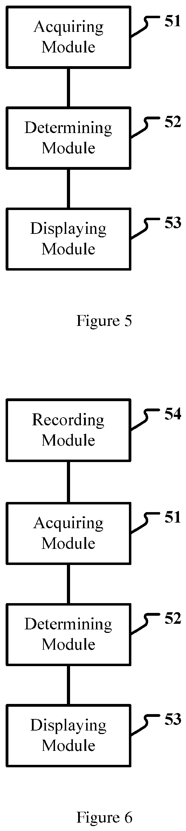

Fig. 5 is a block diagram showing a contact managing apparatus according to an embodiment. The apparatus may be realized as a part of or all of an electronic device in the form of software, hardware or a combination thereof.

As shown in Fig. 5, the contact managing apparatus comprises the following modules.

An acquiring module 51 is configured to acquire contact information of contacts in a contact book, the contact information including information on viewing of social information of the contacts.

The contact information may include one or more of the following kinds of contact information: a time when a contact is added, a time when the contact is contacted and/or the number of times the contact is contacted, a time when a profile of the contact is viewed and/or the number of times the profile of the contact is viewed, a time when a personal space of the contact is viewed and/or the number of times the personal space of the contact is viewed, a time when information issued by the contact is read and/or the number of times the information issued by the contact is read, and a time when the contact' comments are responded to and/or the number of times the contact's comments are responded to. The time when the profile of the contact is viewed and/or the number of times the profile of the contact is viewed, the time when the personal space of the contact is viewed and/or the number of times the personal space of the contact is viewed, the time when information issued by the contact is read and/or the number of times the information issued by the contact is read, and the time when the contact' comments are responded to and/or the number of times the contact's comments are responded to belong to the information on viewing of the social information of the contact.

A determining module 52 is configured to determine at least one contact whose contact information acquired by the acquiring module 51 meets a prescribed condition as at least one contact to be deleted.

The prescribed condition is a basis for determining whether a contact can be deleted, may be designed by a user himself/herself according to his/her own needs, and may be loose or strict. An example of a loose prescribed condition may be that the most recent time when information issued by the contact was read is half a year ago; that is, if the information issued by the contact has not been read in the recent half year, the contact is determined as a contact to be deleted. An example of a strict prescribed condition may be that the most recent time when information issued by the contact was read is one month ago and the most recent time when the contact responded to comments is one month ago; that is, only if the information issued by the contact has not been read in the recent month and the contact has not responded to comments in the recent month, the contact is determined as a contact to be deleted.

A displaying module 53 is configured to display the contact to be deleted determined by the determining module 52.

In this embodiment, a terminal device can determine, based on contact information of the contacts in the contact book and the prescribed condition, which ones of the contacts have contact information that meets the prescribed condition; and display the determined contacts to be deleted, wherein the contact information includes information on viewing of social information of the contacts. As a result, the terminal device can provide contacts to be deleted based on the information on viewing of the social information of the contacts, so that it is convenient for a user to manage the contacts in the contact book based on the information on viewing of the social information of the contacts.

Fig. 6 is a block diagram showing a contact managing apparatus according to another embodiment. As shown in Fig. 6, in the embodiment, the apparatus further comprises a recording module 54.

The recording module 54 is configured to, before the contact information of the contacts is acquired by the acquiring module 51, record one or more of the following kinds contact information for each contact: a time when the contact is added, a time when the contact is contacted and/or the number of times the contact is contacted, a time when a profile of the contact is viewed and/or the number of times the profile of the contact is viewed, a time when a personal space of the contact is viewed and/or the number of times the personal space of the contact is viewed, a time when information issued by the contact is read and/or the number of times the information issued by the contact is read, and a time when the contact responds to comments and/or the number of times the contact responds to the comments.

The acquiring module 51 is configured to acquire contact information of the contacts in the contact book from the contact information recorded by the recording module 54.

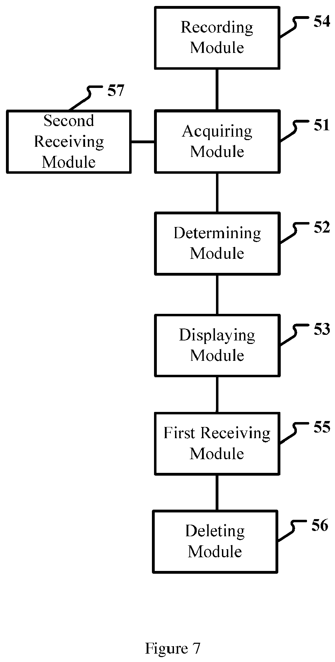

Fig. 7 is a block diagram showing a contact managing apparatus according to yet another embodiment. As shown in Fig. 7, in the embodiment, the apparatus further comprises a first receiving module 55 and a deleting module 56.

The first receiving module 55 is configured to receive a deleting instruction from a user, the deleting instruction indicating selection of one or more of the at least one contact to be deleted that is displayed by the displaying module 53.

The deleting module 56 is configured to delete from the contact book the one or more contacts which are selected according to the deleting instruction received by the first receiving module 55.

In another embodiment, the apparatus further comprises a second receiving module 57 configured to receive an instruction of cleaning up contacts before the contact information of the contacts in the contact book is acquired by the acquiring module 51.

In this embodiment, the cleaning up of contacts may be initiated depending on whether the instruction of cleaning up contacts is received. The instruction of cleaning up contacts may be triggered by selecting a functional key disposed on a terminal device or on an application in the terminal device so that the user can manually start the function of cleaning up contacts.

In other embodiments, the acquiring module 51 is configured to acquire the contact information of the contacts in the contact book at every prescribed time interval. For example, the application in the terminal device may automatically clean up contacts once every week or every 3 days, and display all the contacts to be deleted.

The present invention further provides a contact managing apparatus, comprising: a processor; and a memory storing instructions executable by the processor. The processor is configured to: acquire contact information of contacts in a contact book, the contact information including information on viewing of social information of the contacts; determine at least one contact whose contact information meets a prescribed condition as at least one contact to be deleted; and display the determined contact to be deleted.

With respect to the apparatuses in the above embodiments, the specific manners for performing operations for individual modules therein have been described in detail in the embodiments regarding the related methods, and will not be elaborated herein.

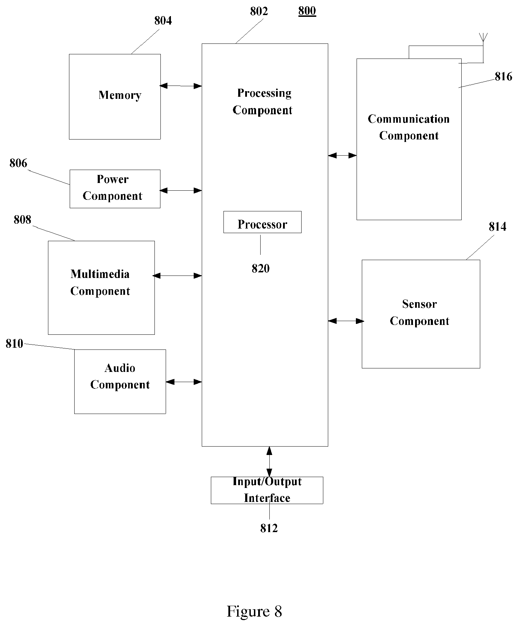

Fig. 8 is a block diagram showing a contact managing apparatus 800 according to still another embodiment. For example, the apparatus 800 may be a mobile phone, a computer, a digital broadcast terminal, a messaging device, a gaming console, a tablet, a medical device, exercise equipment, a personal digital assistant or the like.

Referring to Fig. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component1808 includes a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810includesa microphone ("MIC") configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 2G, or 3G, or a combination thereof. In one embodiment, the communication component 816 receives a broadcast signal or broadcast associated information from an external broadcast management system via a broadcast channel. In one embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an embodiment, there is also provided a non-transitory computer readable storage medium including instructions, such as included in the memory 804, executable by the processor 820 in the apparatus 800, for performing the above-described methods. For example, the non-transitorycomputer-readable storage medium may be a ROM, a RAM, a CD-ROM, a magnetic tape, a floppy disc, an optical data storage device, and the like.

There is provided a non-transitory computer-readable storage medium having stored therein instructions that, when executed by a processor of a mobile terminal, cause the mobile terminal to perform a contact managing method, the method comprising: acquiring contact information of contacts in a contact book, the contact information including information on viewing of social information of the contacts; determining at least one contact whose contact information meets a prescribed condition as at least one contact to be deleted; and displaying the determined contact to be deleted.

Optionally, before acquiring the contact information of the contacts in the contact book, the method further comprises recording one or more of the following kinds of contact information for each contact: a time when the contact is added, a time when the contact is contacted and/or the number of times the contact is contacted, a time when a profile of the contact is viewed and/or the number of times the profile of the contact is viewed, a time when a personal space of the contact is viewed and/or the number of times the personal space of the contact is viewed, a time when information issued by the contact is read and/or the number of times the information issued by the contact is read, and a time when the contact's comments are responded to and/or the number of times the contact's comments are responded to. Acquiring the contact information of the contacts in the contact book comprises: acquiring contact information of the contacts in the contact book from the recorded contact information.

Optionally, after displaying the determined contact to be deleted, the method further comprises: receiving a deleting instruction from a user, the deleting instruction indicating selection of one or more of the at least one contact to be deleted; and deleting the one or more contacts from the contact book.

Optionally, before acquiring the contact information of the contacts in the contact book, the method further comprises: receiving an instruction of cleaning up contacts.

Optionally, said acquiring the contact information of the contacts in the contact book comprises: acquiring the contact information of the contacts in the contact book at every prescribed time interval.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A contact managing method, **characterized by** comprising:
acquiring (S11) contact information of contacts in a contact book, the contact information including information on viewing of social information of the contacts;
determining (S 12) at least one contact whose contact information meets a prescribed condition as at least one contact to be deleted; and
displaying (S13) the determined contact to be deleted.

2. The method of claim 1, wherein before acquiring (S11) the contact information of the contacts in the contact book, the method further comprises recording one or more of the following kinds of contact information for each contact: a time when the contact is added, a time when the contact is contacted and/or the number of times the contact is contacted, and information on viewing of social information of the contact, wherein
the information on viewing of the social information of the contact comprises one or more of: a time when a profile of the contact is viewed and/or the number of times the profile of the contact is viewed, a time when a personal space of the contact is viewed and/or the number of times the personal space of the contact is viewed, a time when information issued by the contact is read and/or the number of times the information issued by the contact is read, and a time when the contact responds to comments and/or the number of times the contact responds to the comments; and
said acquiring the contact information of the contacts in the contact book comprises: acquiring contact information of the contacts in the contact book from the recorded contact information.

3. The method of claim 1, wherein after displaying the determined contact to be deleted, the method further comprises:
receiving (S46) a deleting instruction from a user, the deleting instruction indicating selection of one or more of the at least one contact to be deleted; and
deleting (S47) the one or more contacts from the contact book.

4. The method of claim 1, wherein before acquiring the contact information of the contacts in the contact book, the method further comprises:
receiving an instruction of cleaning up contacts.

5. The method of claim 1, wherein said acquiring the contact information of the contacts in the contact book comprises: acquiring the contact information of the contacts in the contact book at every prescribed time interval.

6. A contact managing apparatus, **characterized by** comprising:
an acquiring module (51) configured to acquire contact information of contacts in a contact book, the contact information including information on viewing of social information of the contacts;
a determining module (52) configured to determine at least one contact whose contact information acquired by the acquiring module (51) meets a prescribed condition as at least one contact to be deleted; and
a displaying module (53) configured to display the contact to be deleted determined by the determining module (52).

7. The apparatus of claim 6, further comprising a recording module (54) configured to, before the contact information of the contacts is acquired by the acquiring module (51), record one or more of the following kinds of contact information for each contact: a time when the contact is added, a time when the contact is contacted and/or the number of times the contact is contacted, and information on viewing of social information of the contact, wherein
the information on viewing of the social information of the contact comprises one or more of: a time when a profile of the contact is viewed and/or the number of times the profile of the contact is viewed, a time when a personal space of the contact is viewed and/or the number of times the personal space of the contact is viewed, a time when information issued by the contact is read and/or the number of times the information issued by the contact is read, and a time when the contact responds to comments and/or the number of times the contact responds to the comments; and
wherein the acquiring module (51) is configured to acquire contact information of the contacts in the contact book from the contact information recorded by the recording module (54).

8. The apparatus of claim 6, further comprising:
a first receiving module (55) configured to receive a deleting instruction from a user, the deleting instruction indicating selection of one or more of the at least one contact to be deleted that is displayed by the displaying module (53); and
a deleting module (56) configured to delete, from the contact book, the one or more contacts which are selected according to the deleting instruction received by the first receiving module (55).

9. The apparatus of claim 6, further comprising: a second receiving module (57) configured to receive an instruction of cleaning up contacts, before the contact information of the contacts in the contact book is acquired by the acquiring module (51).

10. The apparatus of claim 6, wherein the acquiring module (51) is configured to acquire the contact information of the contacts in the contact book at every prescribed time interval.

11. A contact managing apparatus, **characterized by** comprising:
a processor (820); and
a memory (804) storing instructions executable by the processor,
wherein the processor (820) is configured to:
acquire contact information of contacts in a contact book, the contact information including information on viewing of social information of the contacts;
determine at least one contact whose contact information meets a prescribed condition as at least one contact to be deleted; and
display the determined contact to be deleted.

12. A computer program including instructions for executing the steps of a contact managing method according to any one of claims 1 to 5, when said program is executed by a computer.

13. A recording medium readable by a computer and having recorded thereon a computer program including instructions for executing the steps of a contact managing method according to any one of claims 1 to 5.
